# EUROPEAN PATENT SPECIFICATION

(11) **EP 2 568 398 B1**
(45) Date of publication and mention of the grant of the patent: **25.07.2018**
(21) Application number: 12181341.4
(22) Date of filing: 22.08.2012
(51) Int. Cl.: G06F 17/30, G06F 17/22

(54) **A system and method for converting a legacy tool file to a markup language file**
System und Verfahren zum Umwandeln einer Datei eines Altwerkzeugs in eine Markup-Language-Datei
Système et procédé pour convertir un fichier d'outil existant à un fichier de langage de balisage

(30) Priority: 07.09.2011 IN 2493MU2011
(43) Date of publication of application: 13.03.2013
(73) Proprietor: Tata Consultancy Services Limited, 400021 Maharashtra (IN)
(72) Inventor: Sucheta, Lakshmi, Bangalore-93 (IN); Vandanam, Veeresh, Bangalore-93 (IN); Vigneswaran, S., Bangalore-93 (IN); Raju, Sappa, Bangalore-93 (IN)
(74) Representative: Lloyd, Patrick Alexander Desmond

(56) References cited:
- US-A1- 2006 101 058
- JEAN-PIERRE CHANOD ET AL: "From Legacy Documents to XML: A Conversion Framework", 1 January 2005 (2005-01-01), RESEARCH AND ADVANCED TECHNOLOGY FOR DIGITAL LIBRARIES LECTURE NOTES IN COMPUTER SCIENCE;;LNCS, SPRINGER, BERLIN, DE, PAGE(S) 92 - 103, XP019018385, ISBN: 978-3-540-28767-4 * page 92, line 1 - page 95, line 8 * * page 96, line 10 - page 100, line 31 *
- NEWCOMB P ET AL: "Automated Transformation of Legacy Systems", CROSSTALK (HILL AFB), U.S. DEPARTMENT OF DEFENSE, SOFTWARE TECHNOLOGY SUPPORT CENTER, US, 1 December 2001 (2001-12-01), pages 18-22, XP008107922,

## Description

### FIELD OF THE INVENTION

The present invention relates to a system and method for conversion of one file format into another wherein both the file formats are compatible with distinct Platforms. In particular the present invention describes a system and method for converting a model file in Mantext (also known as Mtext) format into a file in Dialogue exchange format (also known as DXF).

### BACKGROUND OF THE INVENTION

A legacy system or tool is an outdated method, technology, or computer system that include procedures or terminology that are no longer relevant in the present state of technology. Such systems and software may not generally be understood and used by a large number of professionals or users and therefore may hinder the development of various aspects of a particular technology. Such legacy systems may often run on outdated hardware and may need special provisions for their maintenance thus increase the costs for the organizations using them. Often there may be issues relating to forward compatibility of such systems and software and therefore they may not be adapted to the current technologies and knowledge.
A number of problems are encountered while migrating from legacy software to state of the art technology. A major issue while migrating from a source legacy platform to a state of art target platform is the compatibility of the source data with the target platform. The application on the source platform and the application on the target platform may both use common data, but may use different formats. In other words, the data on the source platform may be present in a different format that cannot be easily manipulated by the target platform.

One such legacy platform is Mantext which is a document composition tool that enables creation of a dynamic document with embedded logic. It is also referred as Mtext and it executes on a mainframe. The text file during editing is not exactly displayed in the same form as it is printed or displayed as a finished product. Hence, it slows down development time considerably and increases printing volumes. Further Mtext does not provide version control, colour support, 'Undo' command etc. Moreover, it also does not support multiple font sizes on the same line. Hence, there remains a need to migrate from such legacy systems and software to a state of the art system that may be widely applicable and easy to use and may also provide enhanced utility.
One such state of the art platform that is applicable to variety of domains is Dialogue. Dialogue is a comprehensive platform for building and deploying all high-volume, on-demand, and interactive document applications across the enterprise. It was designed with an open architecture and robust functionality to easily connect with an enterprise's data sources, systems, and web infrastructure.
The Dialogue platform easily fits into diverse IT environments, streamlining document processes and workflow by automating manual steps and eliminating point solutions with its flexibility and depth of functionality. Data and content can be directly retrieved in real time from an unlimited number of diverse data sources simultaneously, eliminating pre- and post-processing systems and expensive maintenance.
In order to solve the above mentioned problems, the current invention proposes a system and method for converting an Mtext model file into a markup language file that is compatible with the dialogue platform and thus reduces the need of manually converting the Mtext files into Dialogue compatible files.
Other features and advantages of the present invention will be explained in the following description of the invention having reference to the appended drawings.

D1 (US2006101058) discloses a method for transforming legacy documents into XML documents. D1 teaches an indirect conversion of a legacy document into a XML file. D1 applies a two-step conversion process: first, the legacy document is converted into a (X)HTML document and then converted to a XML document.

### OBJECTS OF THE INVENTION

It is a primary object of the invention to provide, a system and a related method for automating the conversion of a model file compatible with a legacy document composition tool executing on a mainframe to a markup language file compatible with a communication management platform executing on a server.

It is another object of the invention to provide, a system and a related method for automating the conversion of a ManText file into an equivalent Dialogue exchange platform file. Thus, reducing manual intervention while converting a Mantext/ Mtext model file to a Dialogue exchange format file.

It is another objective of the present invention to provide various reports that helps in monitoring the conversion process.

It is another objective of the invention to provide method and system that improves the reliability and precision for a voluminous conversion of Mantext file to Dialogue exchange file that are beyond human capabilities of size, weight, speed, endurance, etc.

Yet another objective of present invention is to enhance the productivity of migration from legacy systems to state of the art systems.

The present invention may also help in reducing the costs and efforts placed while development and testing.

Another objective of the invention is to provide various reports that may help in reconciliation of the conversion process.

### SUMMARY OF THE INVENTION:

The invention is defined by the independent claims to which reference should be made.

Embodiments of the present invention are directed to a system and method for converting a model file compatible with a legacy system such as a document composition tool executing on a mainframe to a markup language file such as an XML file that is compatible with a communication management platform executing on a server. In an embodiment, the present invention describes a system and method for converting a model file compatible into a markup language file such that each model file section stored in a mainframe may be converted into a corresponding markup language file. The model file may be exported from the mainframe comprising a legacy document composition tool to the server comprising a state of the art communication management platform such as Dialogue by employing the system described by the present invention.

Upon exporting the model file, one or more control instructions relating to the format of the model file may be automatically extracted from said model file by means of a variable extraction module. The variable extraction module may then extract and identify one or more variables from said one or more control instructions of the model file. Such identified variables relating to the file format of the legacy document composition tool may then be substituted by equivalent variables related to the markup language file format, based on one or more attributes of the extracted and identified variables.

Further, one or more rules embedded in the extracted control instructions may then be automatically extracted by a rule identification module from the model file. The extracted rules may then be identified and substituted with equivalent rules relating to the markup language file format based on one or more attributes of the extracted rules. The system described herein may further include a paragraph identification module for extracting one or more paragraphs from the one or more control instructions of the model file. Upon extracting said one or more paragraphs said paragraph identification module may then identify and substitute said one or more extracted paragraphs with one or more equivalent paragraphs relating to the markup language file format based on the rule present in the extracted paragraphs.

After substituting the constituent variables, rules and paragraphs of the control instructions of the model file, the system may enable importing said constituents in the communication management platform at a single stretch, and thus completing the conversion of the control instructions. In an aspect the system described herein may also be known as Mtext to DXF converter or MTD converter.

In an aspect, the legacy document composition tool may be Mantext platform and the communication management platform may be Dialogue platform.

In an embodiment, the markup language file compatible with communication management platform such as Dialogue platform may be an XML file having one or more attributes in dialogue exchange format. In an aspect, one or more attributes of the extracted variables may be data-type of the variable, variable name, display string of the variable and Output format of the variable.

In an embodiment, said one or more attributes of the extracted rules may be the value of a variable resulting from a condition, a paragraph being fired resulting from a condition and one or more operations being performed based on a condition.

The foregoing has broadly outlined the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures.

It is to be expressly understood, however, that each of the figures is provided for the purpose of illustration and description only and is not intended as a definition of the limits of the present invention.

### BRIEF DESCRIPTION OF DRAWINGS

The foregoing summary, as well as the following detailed description of preferred embodiments, is better understood when read in conjunction with the appended drawings. For the purpose of illustrating the invention, there is shown in the present document example constructions of the invention; however, the invention is not limited to the specific methods and apparatus disclosed in the document and the drawing:
Figure 1 illustrates a pictorial representation of Mtext along with its various components comprising its environment.
Figure 2 illustrates an architectural framework for the Mtext to DXF converter in accordance with an embodiment of the present invention.

### BRIEF DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

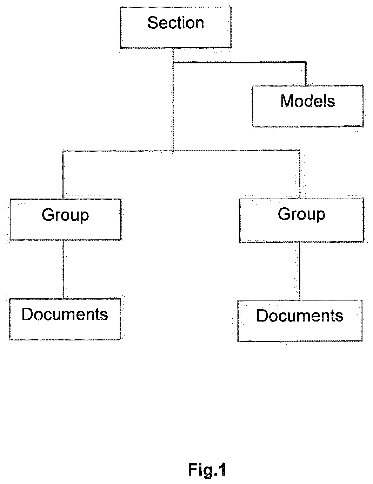

**Figure 1** illustrates a pictorial representation of Mtext along with its various components comprising its environment.

The Mtext model file (100) may include a section (101) that may further consist of a plurality of groups (102) and a model library (103). A particular group (102) may contain a plurality of documents (104) that include text containing one or more control instructions and model calls that may be expanded while the document is formatted or printed. The model library (103) may at least consist of formatting instructions and/or text to be written. In a preferred embodiment, the model names may be prefixed with certain special characters such as pound sign etc.

The Mtext document composition tool may also include a document formatting facility. Such a document formatting facility may consist of a plurality of instructions for handling the semantics and syntax of a related model file such as control instructions, control characters, typographical instructions, hexadecimal-coded characters, line-tabs, models, head and line commands for printing etc.

In an embodiment, the control instructions may be implemented within an Mtext document. In an aspect, the control instructions of Mtext document may define the output format of said document.

Further, the typographical instructions may be implemented to emphasize or highlight individual characters, words, sentences or paragraphs in the Mtext document. In an aspect, the typographical instructions may include instructions such as Begin boldface, End boldface, Print boldface to end of word, Begin underlining, End underlining, Underline to end of word, Begin italics, End italics, Print italics to end of word, Begin superscript, End superscript and continue normally, Superscript next character only then continue normally, Begin subscript, End subscript and continue normally, Subscript next character only, then continue normally, and the like.

In an embodiment, a plurality of control characters may be included in the Mtext file format that may be of types including but not limited to, Local variables, Global variables, System variables, Name variables, and the like. In an aspect, the global variables may define various aspects of the system such as user name, time, operating system, section and group, line number, duplicate text, current paragraph number, document/model name, date, page number, and the like.

In another embodiment, the hexadecimal-coded characters may facilitate using hexadecimal codes to send characters that may not be on a user's keyboard.

The Line-tabs may specify the number of the column where the text may start from. In an aspect, the number provided in the line tab may be in the range of 1 to 250. Moreover, each succeeding line tab may have a number higher than the one preceding it.

The header commands and line commands are executed as soon as the user hits enter. Such header commands may affect a document/model as a whole or may activate general system functions. The line commands may be effective within a document/model.

In an aspect, the header command may facilitate various functions including but not limited to, Blank lines at beginning of document, Jump to end of document, Horizontal scrolling, Create a document, Delete document, Retrieve document, Display model menus, Find specific text, Display document summary, Retrieve doc. into current document, Jump to new section/group, Retrieve next document, and the like.

In an aspect, the line command may facilitate various functions including but not limited to, add blank lines, copy lines, delete lines, insert text below line, move lines, duplicate line, move line to top of screen, and the like.

The present invention describes a system and method for converting a model file or document file compatible with a legacy document composition tool to a markup language file compatible with a communication management platform, wherein each model file section stored in a mainframe is converted to a corresponding markup language file stored on a server. In an aspect, the method described may facilitate migration from a legacy document composition tool to a state of the art communication management platform.

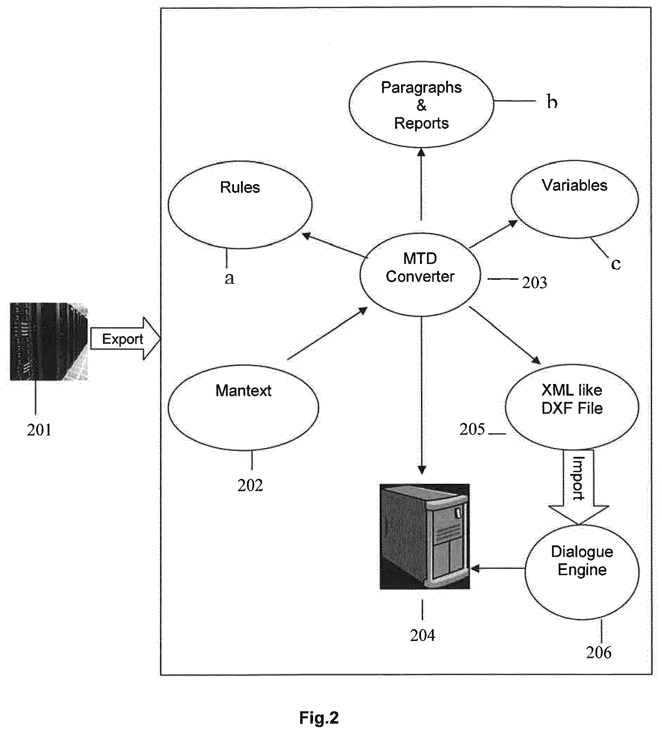

According to an embodiment the present invention describes a Mantext to Dialogue conversion system and method as described in **Figure 2****.**

Figure 2 generally describes an architectural framework for the Mtext to DXF converter in accordance with an embodiment of the present invention.

The Mantext platform along with the related documents/models typically reside/executed on a mainframe (201). The Mtext model file (202) is imported from the mainframe (201) to Mtext to DXF converter hereafter known as MTD converter (203). The MTD converter (203) intakes the MText model file (202) as input and produces a dialogue compatible file an XML like Dialogue Exchange Format file (205) as output. The Mtext model file (202) includes MText Variables (a), MText Paragraphs (b), MText Rules (c) and MText Control instructions.

The MTD converter (203) extracts MText Variables (a), MText Paragraphs (b), MText Rules (c) from MText model file (202) and produces an XML like file called Dialogue exchange format file (205). The MTD converter (203) follows DXF approach. In the final DXF file the input MText Variables (a), MText Paragraphs (b) and MText Rules (c) and some of the MText Control instructions may be represented as XML elements with some attributes in the DXF. A DXF file is same like an XML file. The dialogue platform/Engine (206) resides on a server (204).

In an embodiment, the MTD converter (203) as described herein may be enabled to convert any type of source format file into a Dialogue compatible format file by changing the logic of extraction of information. In an aspect the MTD converter (203) may be implemented on the server (204) or on a different hardware that may be capable of supporting the requirements of the MTD converter.

In an embodiment, the MTD converter (203) may also facilitate creating one or more reports for monitoring the conversion of each model. In an aspect, the MTD converter (203) may facilitate creation of a status report that may act as an audit report indicating the status of a given MText code line present in the MText model. The status provided by such a status report may be namely handled, not handled, manual intervention, ignored, and the like. In another aspect, the MTD converter (203) may also facilitate creation of a variable report that may list out all general variables and formula variables information present in an MText model file. In yet another aspect, the MTD converter (203) may also facilitate creation of a paragraph report that may include a plurality of MText paragraphs and their corresponding text rules and paragraphs rules if any. A rules report may also be generated that may provide information about rules present in an MText model and corresponding equivalent rule in the dialogue format. A Unit Test Plan Template Report may also be provided that facilitates a plurality of unit test plan test cases for each model.

MText to DXF (MTD) Tool takes MText model file as input and produces a dialogue compatible file called DXF (Dialogue Exchange Format) as output. MTD Tool follows DXF approach. A DXF file may be similar to an XML file. MText Variables, MText Paragraphs, MText Rules and some of the MText control instructions may be represented as XML elements with some attributes in the DXF. Each MText model is converted as a dialogue section that means one MText model refers to one section in the dialogue.

Mtext to DXF (MTD) tool as described in the present application may be developed on Eclipse IDE using Jdk1.6 software and XML DOM API.

In an embodiment, the MTD tool may include a plurality of folders such as a BIN folder that may contain a runTool.bat file, an ERRORS folder that may contain error log file out.txt. When the MTD tool is running all console output statements may be redirected to out.txt text file. Further, an INPUT folder may also be included that contains input MText models. User may be required to place MText models in the INPUT folder before running the tool. A LIB folder may be included that contains executable file jar. An XREF folder may also be included for containing external inputs required by tool and external jars. XREF folder may contain a plurality of files including but not limited to xref file and jar files that may used for creating excel reports, provide input MText model names, and the like. Further, an OUTPUT folder may also be provided that may be created with the MText model name for each input MText model. Under such a folder two child folders may be created for example Dxf and Report wherein the Dxf folder contains output .dxf file and Reports folder contains report files.

In an embodiment, a plurality of text files may be included in the MTD tool. In an aspect, a text file may be included that may contain a list of keywords used in the dialogue. Such a file may be used in case an MText variable is same as dialogue keyword, the model name may be prefixed to the variable name in DXF to avoid ambiguity between variable and keyword and to avoid any rule parsing errors in the dialogue. Further, in case a new keyword is encountered then the text file containing the list of keywords may be updated with the new keyword.

In another aspect, a text file may be included that may contain a list of commands that may be ignored in the tool. In case a new command is encountered, said text file may be updated with the new command.

In another aspect, a text file may be included that may contain a list of commands that requires manual intervention. In case a new manual intervention command is encountered, said text file may be updated with commands.

In another aspect, a text file may be included that may contain a list of commands wherein general manual interventions are required for a model.

In another aspect, a text file may be included that may facilitate writing a log message for each input Mtext model. The log message may be a success message or a failure message, for example, Success message: 111//Success//<Input MText Model Name>, Failure message: 000//Failure////<Input MText Model Name>, and the like.

In yet another aspect, a text file may be included that may contain a list of various font models and corresponding font name and font size.
The methodology and techniques described with respect to the exemplary embodiments can be performed using a machine or other computing device within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in a server-client user network environment, or as a peer machine in a peer-to-peer (or distributed) network environment.
Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.
The preceding description has been presented with reference to various embodiments. Persons skilled in the art and technology to which this application pertains will appreciate that alterations and changes in the described structures and methods of operation can be practiced without meaningfully departing from the principle and scope.

## Claims

1. An automated method for converting a source model Mantext file compatible with a legacy document composition tool to a target markup language file dialogue exchange format compatible with a communication management platform, wherein each source model Mantext file section stored in a mainframe is converted to a corresponding target markup language file dialogue exchange format and stored on a server, the method **characterized by** the steps of:
a) exporting the source model Mantext file from the mainframe (201) to the server (204);
b) extracting one or more control instructions from the source model Mantext file automatically;
c) extracting variable from the one or more control instructions of the source model Mantext file and substituting the extracted variable of the control instructions of the source model Mantext file with the equivalent variable of the target markup language file dialogue exchange format based on one or more attributes of the extracted variable;
d) extracting rule from the one or more control instructions from the source model Mantext file automatically and substituting the extracted rule of the control instructions of the source model Mantext file with the equivalent rule of the target markup language file dialogue exchange format based on one or more attributes of the extracted rule;
e) extracting paragraph from the one or more control instructions of the source model Mantext file and substituting the extracted paragraph of the control instructions of the source model Mantext file with the equivalent paragraph of the target markup language file dialogue exchange format based on the rule present in the extracted paragraph;
f) substituting the control instructions of the source model Mantext file with an equivalent control instruction of the target markup language file dialogue exchange format based a one or more attributes of the control instructions of the source model Mantext file; and
g) importing the substituted variables, rules, paragraphs and the control instructions in the communication management platform in a single stretch.

2. The method of claim 1, wherein the legacy document composition tool is Mantext platform and the communication management platform is Dialogue platform.

3. The method of claim 2, wherein the target markup language file dialogue exchange format compatible with communication management platform is an XML file having one or more attributes in dialogue exchange format.

4. The method of claim 1, wherein said one or more attributes of the extracted variables are at least data-type of the variable, variable name, display string of the variable and Output format of variable.

5. The method of claim 1, wherein said one or more attributes of the extracted rule are the value of a related variable, a paragraph being fired and an operation being performed based on one or more conditions.

6. A system for converting a source model Mantext file compatible with a legacy document composition tool to a target markup language file dialogue exchange format compatible with a communication management platform, the system, **characterized by**:
a mainframe (201) for storing the source model Mantext file compatible with said legacy document composition tool and exporting the same;
a server (204) for storing the output target markup language file dialogue exchange format compatible with said communication management platform; a MTD (MText to Dialogue Exchange Format) converter module (203) comprising of:
a module for automatically extracting one or more control instructions from the source model Mantext file; a variable identification module for extracting, identifying and substituting a variable from the one or more control instructions of the source model Mantext file with the equivalent variable of the target markup language file dialogue exchange format based on one or more attributes of the extracted variable;
a rule identification module for extracting, identifying and substituting a rule of the source model Mantext file with the equivalent rule of the target markup language file dialogue exchange format based on the attributes of the extracted rule; and
a paragraph identification module for extracting, identifying and substituting a paragraph of the source model Mantext file with the equivalent paragraph of the target markup language file dialogue exchange format based on the rule present in the extracted paragraph; and
a module for substituting the control instructions of the source model Mantext file with an equivalent control instruction of the target markup language file dialogue exchange format based a one or more attributes of the control instructions of the source model Mantext file; and
a module for importing the substituted variables, rules, paragraphs and the control instructions in the communication management platform in a single strech.

## Patentansprüche

1. Automatisches Verfahren zum Umwandeln einer Quellmodell-Mantext-Datei, die mit einem Altdokumenterstellungswerkzeug kompatibel ist, in ein Dokumentenbeschreibungssprachdatei-Dialogaustausch-Zielformat, das mit einer Kommunikationsmanagementplattform kompatibel ist, wobei jeder in einem Mainframe gespeicherte Quellmodell-Mantext-Dateiteil in ein entsprechendes Dokumentenbeschreibungssprachdatei-Dialogaustausch-Zielformat konvertiert und auf einem Server gespeichert wird, wobei das Verfahren durch die folgenden Schritte gekennzeichnet ist:
a) Exportieren der Quellmodell-Mantext-Datei vom Mainframe (201) auf den Server (204);
b) automatisches Extrahieren von einem oder mehreren Steuerbefehlen von der Quellmodell-Mantext-Datei;
c) Extrahieren einer Variablen von den ein oder mehreren Steuerbefehlen der Quellmodell-Mantext-Datei und Substituieren der extrahierten Variablen der Steuerbefehle der Quellmodell-Mantext-Datei mit der äquivalenten Variablen des Dokumentenbeschreibungssprachdatei-Dialogaustausch-Zielformats auf der Basis von einem oder mehreren Attributen der extrahierten Variablen;
d) automatisches Extrahieren einer Regel von den ein oder mehreren Steuerbefehlen von der Quellmodell-Mantext-Datei und Substituieren der extrahierten Regel der Steuerbefehle der Quellmodell-Mantext-Datei mit der äquivalenten Regel des Dokumentenbeschreibungssprachdatei-Dialogaustausch-Zielformats auf der Basis von einem oder mehreren Attributen der extrahierten Regel;
e) Extrahieren eines Absatzes aus den ein oder mehreren Steuerbefehlen der Quellmodell-Mantext-Datei und Substituieren des extrahierten Absatzes der Steuerbefehle der Quellmodell-Mantext-Datei durch den äquivalenten Absatz des Dokumentenbeschreibungssprachdatei-Dialogaustausch-Zielformats auf der Basis der in dem extrahierten Absatz vorhandenen Regel;
f) Substituieren der Steuerbefehle der Quellmodell-Mantext-Datei durch einen äquivalenten Steuerbefehl des Dokumentenbeschreibungssprachdatei-Dialogaustausch-Zielformats auf der Basis von einem oder mehreren Attributen der Steuerbefehle der Quellmodell-Mantext-Datei; und
g) Importieren der substituierten Variablen, Regeln, Absätze und der Steuerbefehle in der Kommunikationsmanagementplattform in einem einzigen Stück.

2. Verfahren nach Anspruch 1, wobei das Altdokumenterstellungswerkzeug eine Mantext-Plattform ist und die Kommunikationsmanagementplattform eine Dialogue-Plattform ist.

3. Verfahren nach Anspruch 2, wobei das mit der Kommunikationsmanagementplattform kompatible Dokumentenbeschreibungssprachdatei-Dialogaustausch-Zielformat eine XML-Datei mit einem oder mehreren Attributen im Dialogaustauschformat ist.

4. Verfahren nach Anspruch 1, wobei die genannten ein oder mehreren Attribute der extrahierten Variablen wenigstens Datentyp der Variablen, Variablenname, Anzeigestring der Variablen und Ausgabeformat der Variablen sind.

5. Verfahren nach Anspruch 1, wobei die genannten ein oder mehreren Attribute der extrahierten Regel der Wert einer verwandten Variablen, ein abgefeuerter Absatz und eine auf der Basis von einer oder mehreren Bedingungen durchgeführte Operation sind.

6. System zum Umwandeln einer mit einem Altdokumenterstellungswerkzeug kompatiblen Quellmodell-Mantext-Datei in ein mit einer Kommunikationsmanagementplattform kompatibles Dokumentenbeschreibungssprachdatei-Dialogaustausch-Zielformat, wobei das System **gekennzeichnet ist durch**:
einen Mainframe (201) zum Speichern der Quellmodell-Mantext-Datei, die mit dem genannten Altdokumenterstellungswerkzeug kompatibel ist und es exportiert;
einen Server (204) zum Speichern des ausgegebenen Dokumentenbeschreibungssprachdatei-Dialogaustausch-Zielformats, das mit der genannten Kommunikationsmanagementplattform kompatibel ist; wobei ein MTD-(MText to Dialogue Exchange Format)-Konvertermodul (203) Folgendes umfasst:
ein Modul zum automatischen Extrahieren von einem oder mehreren Steuerbefehlen aus der Quellmodell-Mantext-Datei;
ein Variablenidentifikationsmodul zum Extrahieren, Identifizieren und Substituieren einer Variablen aus den ein oder mehreren Steuerbefehlen der Quellmodell-Mantext-Datei **durch** die äquivalente Variable des Dokumentenbeschreibungssprachdatei-Dialogaustausch-Zielformats auf der Basis von einem oder mehreren Attributen der extrahierten Variablen;
ein Regelidentifikationsmodul zum Extrahieren, Identifizieren und Substituieren einer Regel der Quellmodell-Mantext-Datei **durch** die äquivalente Regel des Dokumentenbeschreibungssprachdatei-Dialogaustausch-Zielformats auf der Basis der Attribute der extrahierten Regel; und
ein Absatzidentifikationsmodul zum Extrahieren, Identifizieren und Substituieren eines Absatzes der Quellmodell-Mantext-Datei **durch** den äquivalenten Absatz des Dokumentenbeschreibungssprachdatei-Dialogaustausch-Zielformats auf der Basis der in dem extrahierten Absatz vorhandenen Regel; und
ein Modul zum Substituieren der Steuerbefehle der Quellmodell-Mantext-Datei **durch** einen äquivalenten Steuerbefehl des Dokumentenbeschreibungssprachdatei-Dialogaustausch-Zielformats auf der Basis von einem oder mehreren Attributen der Steuerbefehle der Quellmodell-Mantext-Datei; und
ein Modul zum Importieren der substituierten Variablen, Regeln, Absätze und der Steuerbefehle in der Kommunikationsmanagementplattform in einem einzigen Stück.

## Revendications

1. Procédé automatisé pour convertir un fichier modèle Mantext source compatible avec un outil de composition de document hérité en un fichier en langage de balisage cible format échange de dialogue compatible avec une plate-forme de gestion de communication, dans lequel chaque section de fichier modèle Mantext source stocké dans un ordinateur central est convertie en un fichier en langage de balisage cible format échange de dialogue correspondant et stocké sur un serveur, le procédé étant **caractérisé par** les étapes consistant à :
a) exporter le fichier modèle Mantext source de l'ordinateur central (201) au serveur (204) ;
b) extraire automatiquement une ou plusieurs instructions de commande du fichier modèle Mantext source ;
c) extraire une variable de l'une ou de plusieurs instructions de commande du fichier modèle Mantext source et substituer la variable extraite des instructions de commande du fichier modèle Mantext source avec la variable équivalente du fichier en langage de balisage cible format échange de dialogue sur la base d'un ou de plusieurs attributs de la variable extraite ;
d) extraire automatiquement une règle de l'une ou de plusieurs instructions de commande du fichier modèle Mantext source et substituer la règle extraite des instructions de commande du fichier modèle Mantext source avec la règle équivalente du fichier en langage de balisage cible format échange de dialogue sur la base d'un ou de plusieurs attributs de la règle extraite ;
e) extraire un paragraphe de l'une ou de plusieurs instructions de commande du fichier modèle Mantext source et substituer le paragraphe extrait des instructions de commande du fichier modèle Mantext source avec le paragraphe équivalent du fichier en langage de balisage cible format échange de dialogue sur la base de la règle présente dans le paragraphe extrait ;
f) substituer les instructions de commande du fichier modèle Mantext source avec une instruction de commande équivalente du fichier en langage de balisage cible format échange de dialogue sur la base d'un ou de plusieurs attributs des instructions de commande du fichier modèle Mantext source ; et
g) importer les variables, règles, paragraphes et instructions de commande substitués dans la plate-forme de gestion de communication en une seule fois.

2. Procédé selon la revendication 1, dans lequel l'outil de composition de document hérité est une plate-forme Mantext et la plate-forme de gestion de communication est une plate-forme Dialogue.

3. Procédé selon la revendication 2, dans lequel le fichier en langage de balisage cible format échange de dialogue compatible avec la plate-forme de gestion de communication est un fichier XML ayant un ou plusieurs attributs en format d'échange de dialogue.

4. Procédé selon la revendication 1, dans lequel ledit un ou lesdits plusieurs attributs des variables extraites sont au moins un type de données de la variable, le nom de la variable, une séquence d'affichage de la variable et un format Output de la variable.

5. Procédé selon la revendication 1, dans lequel ledit un ou lesdits plusieurs attributs de la règle extraite sont la valeur d'une variable associée, un paragraphe étant déclenché et une opération étant effectuée sur la base d'une ou de plusieurs conditions.

6. Système de conversion d'un fichier modèle Mantext source compatible avec un outil de composition de document hérité en un fichier en langage de balisage cible format échange de dialogue compatible avec une plate-forme de gestion de communication, le système étant **caractérisé par** :
un ordinateur central (201) pour stocker le fichier modèle Mantext source compatible avec ledit outil de composition de document hérité et l'exporter ;
un serveur (204) pour stocker le fichier en langage de balisage cible format échange de dialogue compatible avec ladite plate-forme de gestion de communication ; un module convertisseur MTD (203) (MText en Dialogue Exchange Format) comprenant :
un module pour extraire automatiquement une ou plusieurs instructions de commande du fichier modèle Mantext source;
un module d'identification de variable pour extraire, identifier et substituer une variable de l'une ou de plusieurs instructions de commande du fichier modèle Mantext source avec la variable équivalente du fichier en langage de balisage cible format échange de dialogue sur la base d'un ou de plusieurs attributs de la variable extraite ;
un module d'identification de règle pour extraire, identifier et substituer une règle du fichier modèle Mantext source avec la règle équivalente du fichier en langage de balisage cible format échange de dialogue sur la base des attributs de la règle extraite ; et
un module d'identification de paragraphe pour extraire, identifier et substituer un paragraphe du fichier modèle Mantext source avec le paragraphe équivalent du fichier en langage de balisage cible format échange de dialogue sur la base de la règle présente dans le paragraphe extrait, et
un module de substitution d'instructions de commande du fichier modèle Mantext source avec une instruction équivalente du fichier en langage de balisage cible format échange de dialogue sur la base d'un ou de plusieurs attributs des instructions de commande du fichier modèle Mantext source ; et
un module pour importer les variables, règles, paragraphes et instructions de commande substitués dans la plate-forme de gestion de communication en une seule fois.
